Europäisches Patentamt

European Patent Office

Office européen des brevets

(19)

(11) Publication number: **0 129 307**
**B1**

(12) # EUROPEAN PATENT SPECIFICATION

(45) Date of publication of patent specification: **22.06.88**

(51) Int. Cl.⁴: **F 04 F 5/52**

(21) Application number: **84302582.6**

(22) Date of filing: **16.04.84**

(54) Vacuum generating apparatus.

(30) Priority: **15.04.83 JP 56391/83**

(43) Date of publication of application:
**27.12.84 Bulletin 84/52**

(45) Publication of the grant of the patent:
**22.06.88 Bulletin 88/25**

(84) Designated Contracting States:
**CH DE FR GB LI**

(56) References cited:
**US-A-4 073 602**

(73) Proprietor: **KABUSHIKI KAISHA MYOTOKU**
**6-18, Shimomaruko 2-chome Ota-ku**
**Tokyo 146 (JP)**

(72) Inventor: **Ise, Yoji**
**6-18 Shimomaruko 2-chome**
**Ota-Ku Tokyo (JP)**

(74) Representative: **Leale, Robin George et al**
**FRANK B. DEHN & CO. Imperial House 15-19**
**Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to vacuum generating apparatus to be used to pick up and move articles, and particularly but not exclusively to vacuum generating apparatus in which the vacuum is obtained by an ejector pump using compressed air from a compressor, and in which a system for starting and stopping vacuum generation is integrally built into the apparatus.

It is known to use a sucker or the like as a means of feeding, moving or taking out articles in various automatic machines and labour saving machines in which the vacuum provided at the sucker or the like is produced by a vacuum pump. However, a disadvantage is that the vacuum pump is large and very costly.

Therefore, a gas ejector pump utilizing a compressor has come to be used, particularly as compressors are normally provided in factories, workshops or the like. The gas ejector pump operates by jetting out compressed air towards a conical hole within a partition chamber to make the pressure within the partition chamber negative. A suction hose extends from one side wall of the partition chamber to a sucker or the like, where a vacuum is made by the suction. This apparatus can be provided cheaply and in a very small size.

However, in order to start and stop suction, the compressor must be controlled or a controlling valve or the like must be provided in a compressed air passage from the compressor. As a result, the entire system is complicated and not easy to handle.

Vacuum generating apparatus in accordance with the pre-characterising portion of claim 1 is known from US—A—4073602. With this apparatus the supply of compressed air is controlled by a separate switch upstream of the longitudinal passage and once the supply is switched on the apparatus operates to generate a vacuum in a vacuum cup at supply pressures above a certain level and to prevent vacuum generation at pressures below this level. When a vacuum is not being generated the compressed air escapes via the vacuum cup rather than being closed off by the apparatus.

It is therefore desirable to provide vacuum generating apparatus which is compact, easy to handle, can save compressed air, and is economical.

According to the invention, there is provided vacuum generating apparatus for use with a source of compressed air, comprising a nozzle arranged to be fed via an inlet thereof with compressed air to generate a vacuum, a slidable spool having a passage extending longitudinally therethrough and a closure member at the downstream end thereof, a rear chamber arranged to receive compressed air from the longitudinal passage to urge the spool forwardly, and a side passage through the wall of the spool in communication with said longitudinal passage, characterised in that the side passage communicates the longitudinal passage with switching means which selectively directs compressed air from said longitudinal passage either to said rear chamber to urge the spool forwardly so that the closure member moves into closing engagement with the nozzle inlet, or to a forward chamber to urge the spool rearwardly to open the nozzle inlet, the longitudinal passage thus communicating with the nozzle inlet for supplying that inlet with compressed air.

In such an arrangement, by switching the switching means, the spool is moved forwardly or rearwardly by the compressed air pressure so as to respectively close or open the nozzle inlet by means of the closure member, thereby determining whether or not compressed air is fed to the nozzle to respectively stop or start the generation of vacuum. A compressor supplying compressed air may be arranged to stop automatically when the nozzle is closed and the pressure exceeds a fixed value, thereby saving compressed air.

Preferably, the spool side passage is disposed substantially half-way along the longitudinal passage and is in communication with a first passage through a housing for a spool, there being two further passages through the housing communicating respectively with the rear chamber and the forward chamber of the spool, and said switching means comprises a switching valve to connect said first housing passage with either the rear chamber passage or the forward chamber passage.

An embodiment of the invention will now be described by way of example and with reference to the accompanying drawings in which:—

Figure 1 is a longitudinally sectioned view of the essential part of vacuum generating apparatus according to the present invention; and

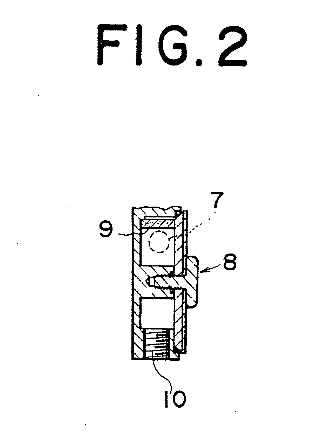

Figure 2 is a sectioned view on line A—A in Figure 1.

A housing 1 is provided at one end with a compressed air feeding passage 3 to be connected with a hose 2 from a compressor (not illustrated) or the like. A nozzle 4 at the downstream end of the feeding passage 3 has its outlet in a pre-formed partition chamber 5. A conical opening 6 is provided opposite the nozzle outlet within the partition chamber 5. On one side wall of the partition chamber 5 a suction passage 7 is separately provided and communicates with an integrally provided air filter 8. The air filter 8 has a ring-shaped filter element 9 made of a sintered metal or the like at an appropriate spacing within it. Another suction hole 10 is provided internally of the ring-shaped filter element 9. A suction hose 11 is connected to the suction hole 10 and a sucker 12 is provided at the tip of the suction hose 11.

In the drawing, the reference numeral 13 denotes a silencer internally provided with silencing material 14 such as air passing fibres to silence exhaust noises.

A spool 15 is disposed to the rear of the nozzle 4 so as to be movable forward and rearward. In front and to the rear of the spool 15 there are spaces within the partition chamber formed in the housing 1. Further, a compressed air passage 17 extends through the centre of the spool 15 so as to be aligned with both the compressed air feeding passage 3 and the nozzle 4. There is located at the tip or downstream end of the spool a closure member or packing 18 which closes the rear end or inlet of the nozzle 4 when the spool 15 moves forward.

The spool is provided substantially in the middle with a communicating passage 19 extending through the wall of the spool to the housing 1.

The housing 1 is provided with a middle passage 20 which is always in communication with the communicating passage 19. The housing also has passages 23 and 24 communicating respectively with a front chamber 21 and rear chamber 22 formed respectively in front of and to the rear of the spool 15. A switching valve 25, which makes the above mentioned middle passage 20 communicate with either the passage 23 or the passage 24, is provided adjacent the housing 1 where the middle passage 20 and passages 23 and 24 emerge therefrom.

In the embodiment shown in the drawings, the switching valve 25 comprises a spool 27 moved by a plunger 30 of a solenoid 26. An annular groove 28 formed in the spool 27 makes the middle passage 20 and passage 23 communicate with each other and, with the movement of the spool 27, an annular groove 29 makes the middle passage 20 and passage 24 communicate with each other.

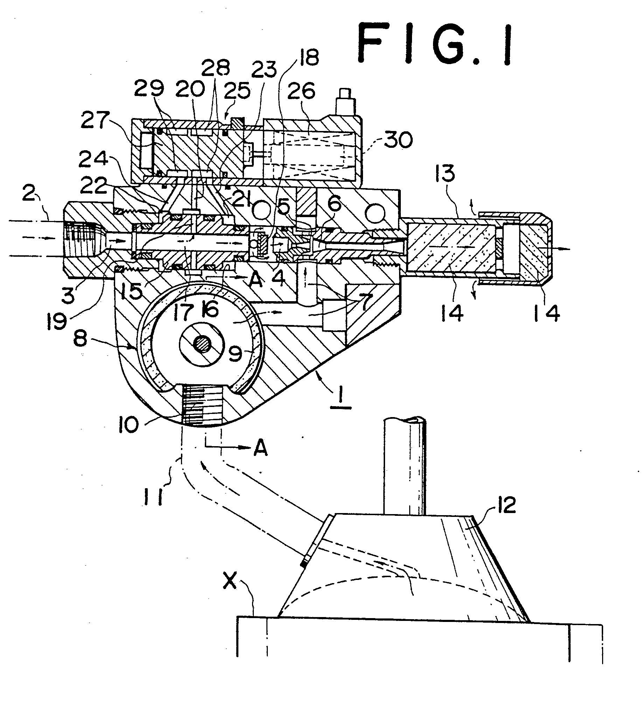

When the spool 27 is in the state illustrated in Figure 1, the sucker 12 picks up an article X. That is to say, compressed air is fed through the hose 2 and feeding passage 3, and a part of the compressed air is fed to the front chamber 21 through the communicating passage 19 of the spool 15, middle passage 20 of the housing, annular groove 28 of the spool 27 and passage 23 of the spool 15. In this state the spool 15 is moved rearward and the packing 18 provided at the downstream end of the spool 15 and the inlet of the nozzle 4 are separated from each other. Thus the compressed air is jetted into the partition chamber 5 and conical opening 6 through the passage 17 of the spool 15 and nozzle 4, so that the pressure within the partition chamber 5 becomes negative. Air is then sucked through the suction passage 7 and hence through the air filter and hose 11 to cause the interior of the sucker 12 to be in a state of at least partial vacuum to suck the article X. By moving the sucker 12, the article X can be freely conveyed.

In order to release the article X in a predetermined position, if the solenoid 26 is electrified the spool 27 is moved to the right (as viewed in Figure 1) by the plunger 30 and the annular groove 29 makes the middle passage 20 and passage 24 communicate with each other. As a result, the compressed air is fed to the rear chamber 22 of the spool 15, the spool 15 is moved forward, the packing 18 at the downstream end of the spool 15 engages and closes the inlet of the nozzle 4. The feed of compressed air to the nozzle 4, partition chamber 5 and conical opening 6 is interrupted and the interior of the sucker 12 is released to atmosphere through the hose 11, air filter 8, suction passage 7, partition chamber 5, conical opening 6 and silencer 13. Therefore, the sucker 12 automatically separates from the article X. It is apparent that the vacuum can be started and stopped quickly by an integrally formed device so that the apparatus is very easy to handle and is compact. A conventionally set compressor can be utilized as it is and compressed air is saved.

**Claims**

1. Vacuum generating apparatus for use with a source of compressed air, comprising a nozzle (4) arranged to be fed via an inlet thereof with compressed air to generate a vacuum, a slidable spool (15) having a passage (17) extending longitudinally therethrough and a closure member (18) at the downstream end thereof, a rear chamber (22) arranged to receive compressed air from the longitudinal passage to urge the spool forwardly, and a side passage (19) through the wall of the spool in communication with said longitudinal passage, characterised in that the side passage (19) communicates the longitudinal passage (17) with switching means (25) which selectively directs compressed air from said longitudinal passage either to said rear chamber (22) to urge the spool (15) forwardly so that the closure member (18) moves into closing engagement with the nozzle inlet or to a forward chamber (21) to urge the spool (15) rearwardly to open the nozzle inlet, the longitudinal passage thus communicating with the nozzle inlet for suppling that inlet with compressed air.

2. Vacuum generating apparatus as claimed in claim 1, wherein the spool side passage (19) is disposed substantially half-way along the longitudinal passage (17) and is in communication with a first passage (20) through a housing for the spool, there being two further passages (24, 23) through the housing communicating respectively with the rear chamber and the forward chamber, and wherein said switching means (25) comprises a switching valve to connect said first housing passage (20) with either the rear chamber passage (24) or the forward chamber passage (23).

3. Vacuum generating apparatus as claimed in claim 2, wherein the switching valve (25) is a longitudinally slidable spool valve (27) controlled by a solenoid (26).

4. Vacuum generating apparatus as claimed in claim 1, 2 or 3, wherein the nozzle (4) is arranged to jet out the compressed air into a conical opening (6) in a partition chamber (5) to generate the vacuum, a suction hole being provided in a wall of the partition chamber.

**Patentansprüche**

1. Vakuumerzeuger zur Verwendung mit einer Druckluftquelle, umfassend eine Düse (4), die so angeordnet ist, daß sie über einen Einlaß derselben mit Druckluft versorgt wird, um ein Vakuum zu erzeugen, eine verschiebbare Spule (15), die einen sich in Längsrichtung durch dieselbe erstreckenden Kanal (17) und ein Verschlußteil (18) am stromabwärts liegenden Ende desselben aufweist, eine hintere Kammer (22), die so angeordnet ist, daß sie Druckluft von dem längsgerichteten Kanal empfängt, um die Spule nach vorne zu drücken, un einen seitlichen Kanal (19) durch die Wand der Spule hindurch in Verbindung mit dem längsgerichteten Kanal, dadurch gekennzeichnet, daß der seitliche Kanal (119) den längsgerichteten Kanal (17) mit einer Schalteinrichtung (25) verbindet, die Druckluft von dem längsgerichteten Kanal wahlweise entweder zu der besagten hinteren Kammer (22) leitet, um die Spule (15) nach vorne zu drücken, so daß das Verschlußteil (18) mit dem Düseneinlaß in Verschlußeingriff gelangt, oder zu einer vorderen Kammer (21) zu leiten, um die Spule (15) nach hinten zu belasten und den Düseneinlaß zu öffnen, wobei der auf diese Weise mit dem Düseneinlaß in Verbindung stehende längsgerichtete Kanal dem Einlaß Druckluft zuführt.

2. Vakuumerzeuger nach Anspruch 1, wobei der seitliche Kanal (19) der Spule im wesentlichen in der Mitte des längsgerichteten Kanals (17) angeordnet ist und mit einem ein Gehäuse für die Spule durchsetzenden ersten Kanal (20) in Verbindung steht, wobei sich zwei weitere Kanäle (24, 23) durch das Gehäuse erstrecken, die mit der hinteren Kammer bzw. mit der vorderen Kammer in Verbindung stehen, und wobei die Schalteinrichtung (25) ein Schaltventil umfaßt, um den ersten Gehäusekanal (20) entweder mit dem Kanal (24) für die hintere Kammer oder mit dem Kanal (23) für die vordere Kammer zu verbinden.

3. Vakuumerzeuger nach Anspruch 2, wobei das Umschaltventil (25) eine in Längsrichtung verschiebbare Ventilspule (27) ist, die durch ein Solinoid (26) gesteuert ist.

4. Vakuumerzeuger nach Anspruch 1, 2 oder 3, wobei die Düse (4) so angeordnet sit, daß sie die Druckluft in eine konische Öffnung (6) in einer Trennkammer (5) ausstößt um das Vakuum zu erzeugen, wobei in einer Wand der Trennkammer eine Saugöffnung ausgebildet ist.

**Revendications**

1. Appareil pour faire le vide destiné à être utilisé avec une source d'air comprimé, comprenant une buse (4) disposée de manière à être alimentée en air comprimé par un orifice d'entrée de celle-ci pour créer un vide, une bobine pouvant glisser (15) comportant un passage (17) la traversant longitudinalement et un élément de fermeture (18) placé à son extrémité aval, une chambre arrière (22) diposée pour recevoir de l'air comprimé arrivant par le passage longitudinal pour pousser la bobine vers l'avant, et un passage latéral (19) precé dans la paroi de la bobine et communiquant avec le passage longitudinal, appareil caractérisée en ce que le passage latéral (19) fait communiquer le passage longitudinal (17) avec des moyens de commutation (25) qui dirigent sélectivement l'air comprimé provenant du passage longitudinal, soit vers la chambre arrière (22) pour pousser la bobine (15) vers l'avant de façon que l'élément de fermeture (18) vienne s'engager en position de fermeture dans l'orifice d'entrée de la buse, soit vers une chambre avant (21) pour pousser la bobine (15) vers l'arrière de manière à ouvrir l'orifice d'entrée de la buse, le passage longitudinal communiquant ainsi avec l'orifice d'engrée de la buse pour alimenter cet orifice d'entrée en air comprimé.

2. Appareil pour faire le vide selon la revendication 1, caratérisé en ce que le passage latéral (19) de la bobine est disposé sensiblement à mi-chemin du passage longitudinal (17) et communique avec un permier passage (20) traversant un carter de bobine, deux autres passages (24, 23) precés dans le carter communiquant respectivement avec la chambre arrière et la chambre avant, et en ce que les moyens de commutation (25) sont constitués par une soupape de commutation permettant de relier le permier passage (20) de carter soit avec le passage (24) de la chambre arrière soit avec le passage (23) de la chambre avant.

3. Appareil pour faire le vide selon la revendication 2, caractérisé en ce que la soupape de commutation (25) est une soupape à bobine pouvant glisser longitudinalement (27) commandée par un solenoïde (26).

4. Appareil pour faire le vide selon l'une quelconque des revendications 1 à 3, caractérisé en ce que la buse (4) est disposée de mainère à projeter un jet d'air comprimé dans une ouverture conique (6) ménagée dans une chambre de séparation (5) pour créer le vide, un trou d'aspiration étant percé dans une paroi de la chambre de séparation.

# F I G. I

# FIG.2